(19) Europäisches Patentamt
European Patent Office
Office européen des brevets

(11) **EP 4 759 886 A1**

(12) **EUROPEAN PATENT APPLICATION**

(43) Date of publication:
**17.06.2026 Bulletin 2026/25**

(21) Application number: **25221528.0**

(22) Date of filing: **08.12.2025**

(51) International Patent Classification (IPC):
***C09D 11/322*** (2014.01)    ***B41J 11/00*** (2006.01)
***C09D 11/40*** (2014.01)

(52) Cooperative Patent Classification (CPC):
**C09D 11/40; B41J 11/002; C09D 11/322**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **13.12.2024 JP 2024218463**

(71) Applicant: **KYOCERA Document Solutions Inc.**
**Osaka-shi, Osaka 540-8585 (JP)**

(72) Inventor: **KIDA, Yukari**
**Osaka-shi, Osaka, 540-8585 (JP)**

(74) Representative: **Viering, Jentschura & Partner mbB**
**Patent- und Rechtsanwälte**
**Grillparzerstraße 14**
**81675 München (DE)**

(54) **INK SET AND RECORDING APPARATUS**

(57)    According to an embodiment of the present disclosure, there is provided an ink set, including: a first ink, a second ink, and a third ink. Each of the first ink, the second ink, and the third ink includes resin fine particles, an organic solvent, water, and a surfactant. A ratio of a pigment to a binder included in the first ink is 0 or more and 1.1 or less. A ratio of a pigment to a binder included in the second ink is 1.3 or more and 3.0 or less. Density of the second ink is 0.05 g/cm³ or more higher than density of the third ink.

FIG.1

EP 4 759 886 A1

**Description**

**Field**

The present disclosure relates to an ink set that is applicable for printing on a recording medium, and a recording apparatus.

**Background**

In inkjet printing on flexible packaging such as resin films, recording media are often transparent. In order to increase the concealing rate of images formed on such transparent recording media, a base is formed using a white ink, followed by printing on the base with a color ink in some cases. Further, in the case where inks are applied in overlapping droplets, there is a problem that the dot diameter of the ink applied later becomes larger than the dot diameter of the ink applied earlier. In this case, problems such as a reduced concealing rate and bleeding of the image due to the white ink occur.

For example, in Japanese Patent Application Laid-open No. 2012-41380, the ratio of a pigment to a binder in a dark-colored white ink and a light-colored white ink are specified, and this is intended to ensure rubfastness and a concealing rate by ejecting the dark-colored white ink earlier and the light-colored white ink on the dark-colored white ink. Further, in Japanese Patent Application Laid-open No. 2003-313468, the viscosity and surface tension of each of a first ink and a second ink before ejection are limited, and this is intended to improve pinning properties. Further, Japanese Patent Application Laid-open No. 2010-76224 discloses that in the ink droplet process, the inks are ejected in order starting with the ink with the lowest solid content among a plurality of inks.

**Summary**

According to an embodiment of the present disclosure, there is provided an ink set, including: a first ink; a second ink; and a third ink.

each of the first ink, the second ink, and the third ink includes resin fine particles, an organic solvent, water, and a surfactant.

A ratio of a pigment to a binder included in the first ink is 0 or more and 1.1 or less.

A ratio of a pigment to a binder included in the second ink is 1.3 or more and 3.0 or less.

Density of the second ink is 0.05 $g/cm^3$ or more higher than density of the third ink.

A recording apparatus that uses an ink set according to an embodiment of the present disclosure includes: an ejection unit; a drying unit; and a control unit.

The ejection unit ejects the first ink, the second ink, and the third ink onto a recording medium.

The drying unit dries the first ink, the second ink, and the third ink applied to the recording medium.

The control unit performs control such that the ejection unit ejects the first ink, the second ink, and the third ink onto the recording medium in this order, and that the drying unit dries the recording medium onto which the first ink, the second ink, and the third ink have been ejected.

**Brief Description of Figures**

Fig. 1 is a block diagram showing a configuration of a recording apparatus;
Fig. 2A is a diagram relating to the evaluation of pinning properties;
Fig. 2B is a diagram relating to the evaluation of pinning properties;
Fig. 3A is a diagram relating to evaluation of rubfastness;
Fig. 3B is a diagram relating to evaluation of rubfastness; and
Fig. 4 is a diagram showing the relationship between a ratio of a pigment to a binder and a concealing rate.

**Detailed Description**

In Japanese Patent Application Laid-open No. 2012-41380, the amount of the binder in the white ink to be printed earlier is small and the adhesion and rubfastness to the base material are insufficient. Further, in Japanese Patent Application Laid-open No. 2003-313468 and Japanese Patent Application Laid-open No. 2010-76224, the viscosity and surface tension of the ink when it lands on the surface of the base material after being ejected do not necessarily match the set values, and it is insufficient for achieving pinning properties. Further, regarding the third ink and subsequent inks, the bleeding suppression effect is even lower and the pinning properties are insufficient.

In view of the circumstances as described above, it is an object of the present disclosure to provide an ink set that is capable of forming high-quality images with favorable adhesion, pinning properties, and rubfastness and preventing color mixing and bleeding, and a recording apparatus.

An embodiment of the present disclosure will be described below with reference to the drawings.

<Ink set>

An ink set according to an embodiment of the present disclosure includes a first ink, a second ink, and a third ink. Each of the first ink, the second ink, and the third ink includes resin fine particles, an organic solvent, water, and a surfactant.

In this embodiment, in the ink set, the ink is a water-based ink used for surface printing in which the ink coating film is present on the outermost layer. The surface printing refers to printing on the front surface (surface on the side viewed by a viewer) of transparent recording media (non-absorbent media). In the case where the viewer views the recording medium on which surface printing has been performed, a positional relationship "viewer, image, and recording medium" is obtained, and the image is directly viewed by the viewer. Further, in this embodiment, printing is performed by ejecting the first ink, the second ink, and the third ink in this order on a transparent recording medium. Note that the ink set in the present disclosure may be used for, for example, back printing or printing on opaque recording media, in addition to the surface printing and printing on non-absorbent media.

The resin fine particle is present in a dispersed state in water (aqueous medium) and functions as a binder that adheres the recording medium and the pigment to each other. The resin fine particle (binder) optimizes the fixability of the pigment such as a titanium oxide particle to the recording medium.

The organic solvent is used to improve the concealment and visibility of the recording medium by the white ink. For example, as the organic solvent, propylene glycol and triethylene glycol monobutyl ether are favorable.

The surfactant optimizes the compatibility and dispersion stability of each component included in the ink. The surfactant used in the first ink, the second ink, and the third ink favorably includes a silicon surfactant. Note that the surfactant is not limited to the silicon surfactant and may include anionic, cationic, amphoteric, and fluorine surfactants.

The first ink is a white ink. For example, in the first ink, a white pigment such as titanium oxide is used.

Further, the binder included in the first ink includes at least resin fine particles of an acrylic resin or a polyolefin resin. This embodiment is characterized in that a ratio (p/B) of a pigment (p) to a binder (B) in the first ink is low. Specifically, the ratio (p/B) in the first ink is favorably 0 to 1.1.

This allows the concealing rate of the formed image to increase by forming a base using the white ink on the transparent recording medium. Further, it is possible to ensure adhesion to the transparent recording medium by lowering the ratio (p/B) of the pigment to the binder in the first ink that is directly in contact with the transparent recording medium, i.e., increasing the amount of the binder.

The content ratio of the binder included in the first ink is not limited because the ratio p/B is determined by the amounts of the pigment and the binder, but the content ratio of the binder resin is favorably 3 mass% or more and 20 mass% or less.

The solvent type or composition is not limited to those shown in Examples. However, as the content ratio of the organic solvent included in the first ink, the content ratio of propylene glycol is favorably 1.0 mass% to 25 mass% and the content ratio of triethylene glycol monobutyl ether is favorably 0.2 mass% to 10.0 mass%.

The surfactant type or composition is not limited to those described below or Examples. However, the content ratio of the surfactant included in the first ink is favorably 0.05 mass% to 0.5 mass% from the viewpoint of the ejectable range.

The solvent composition is not limited to those described below or Examples. However, the content ratio of the water included in the first ink is favorably 50 mass% or more and 80 mass% or less.

Further, in the first ink, the ratio (p/B) may be 0, i.e., the first ink does not necessarily need to include a white pigment. In this case, the first ink functions as an adhesive layer that adheres the recording medium and the second ink that is a white ink to each other, thereby ensuring adhesion to the recording medium and a concealing rate.

The second ink is a white ink. For example, the second ink includes a white pigment such as titanium oxide and a binder that adheres the recording medium and the pigment to each other.

Further, as the binder included in the second ink, resin fine particles with a breaking elongation of 50% or less are used. This embodiment is characterized in that the ratio (p/B) of the pigment (p) to the binder (B) in the second ink is higher than the ratio (p/B) of the pigment (p) to the binder (B) in the first ink. Specifically, the ratio (p/B) in the second ink is favorably 1.3 to 3.0. Further, typically, since the density of titanium oxide used in the white ink is high, the ratio (p/B) in the white ink is higher than that in the color ink. Note that the second ink is not limited to resin fine particles with a breaking elongation of 50% or less. For example, resin fine particles with a breaking elongation of 300% may be used.

As a result, by ejecting the first ink with a large amount of the binder and then ejecting the second ink with a large amount of the pigment on the recording medium, adhesion can be ensured even with a white ink having a large particle size. Further, by setting the ratio (p/B) in the second ink to a predetermined ratio, a concealing rate and rubfastness can be ensured.

The content ratio of the binder included in the second ink is not limited because the ratio (p/B) is determined by the amounts of the pigment and the binder, but the content ratio of the binder resin is favorably 3 mass% or more and 20 mass% or less.

The solvent type or composition is not limited to those shown in Examples. However, as the content ratio of the organic solvent included in the second ink, the content ratio of propylene glycol is favorably 1.0 mass% to 25 mass% and the content ratio of triethylene glycol monobutyl ether is favorably 0.2 mass% to 10.0 mass%.

The surfactant type or composition is not limited to those described below or Examples. However, the content ratio of the surfactant included in the second ink is favorably 0.05 mass% or more and 0.5 mass% or less.

The solvent composition is not limited to those described below or Examples. However, the content ratio of the water included in the second ink is favorably 50 mass% or more and 80 mass% or less.

The third ink is a color ink. For example, in the third ink, a pigment of Cyan, Yellow, Magenta, or Black is used.

Further, in the third ink, resin fine particles with a breaking elongation of 50% or less are used as a binder. Note that the third ink is not limited to resin fine particles with a breaking elongation of 50% or less. For example, resin fine particles with a breaking elongation of 290% may be used.

The content ratio of the binder included in the third ink is favorably, but not limited to, 3 mass% or more and 20 mass% or less.

The solvent type or composition is not limited to those shown in Examples. However, as the content ratio of the organic solvent included in the third ink, the content ratio of propylene glycol is favorably 1.0 mass% to 25 mass% and the content ratio of triethylene glycol monobutyl ether is favorably 0.2 mass% to 10.0 mass%.

The surfactant type or composition is not limited to those described below or Examples. However, the content ratio of the surfactant included in the third ink is favorably 0.05 mass% or more and 0.5mass% or less.

The content ratio of the water included in the third ink is favorably 50 mass% or more and 80 mass% or less.

In this embodiment, the density of the second ink is higher than the density of the third ink. Specifically, the following relationship of $\rho2 - \rho3 > 0.05$ (g/cm$^3$) is established, $\rho2$ indicating the density of the second ink, $\rho3$ indicating the density of the third ink. Note that the density refers to the mass of the pigment per unit volume of the ink.

As a result, by making the density of the second ink higher than the density of the third ink, the agglomeration of the second ink increases and the third ink ejected after the second ink is more likely to agglomerate. Therefore, the diffusion of the third ink and subsequent inks is suppressed when they are ejected, significantly improving the pinning properties.

In the above ink set, the ratio (p/B) of the pigment to the binder in the first ink is 0 or more and 1.1 or less, the ratio (p/B) of the pigment to the binder in the second ink is 1.3 or more and 3.0 or less, the density ($\rho2$) of the second ink is higher than the density ($\rho3$) of the third ink, and the relationship of $\rho2 - \rho3 > 0.05$ (g/cm$^3$) is established. The obtained ink exhibits favorable pinning properties, adhesion, and rubfastness to various non-absorbent media and allows color mixing and bleeding to be prevented. Further, the ink has excellent rubfastness, which allows a printed matter to be used for surface printing or without lamination.

Note that in addition to the above, the ink set may further include known additives such as a dissolution stabilizer, an anti-drying agent, an antioxidant, a viscosity adjustor, a pH adjuster, and an antifungal agent, as necessary.

Further, the colors of the first ink, the second ink, and the third ink are not limited, and various colors (pigments) other than the white ink may be used. Further, the white ink may include not only a pure white color but also white-based colors such as ivory, pale eggshell, oyster white, snow white, moon white, and greyish white. Further, the recording medium onto which the ink set is to be ejected is not limited to a transparent recording medium used for surface printing and back printing and may be an opaque recording medium. That is, the ink used as a base for the first ink and the second ink does not necessarily need to be a white ink.

<Recording apparatus>

A recording apparatus 10 that ejects the ink set in the present disclosure and dries the ejected ink will be described.

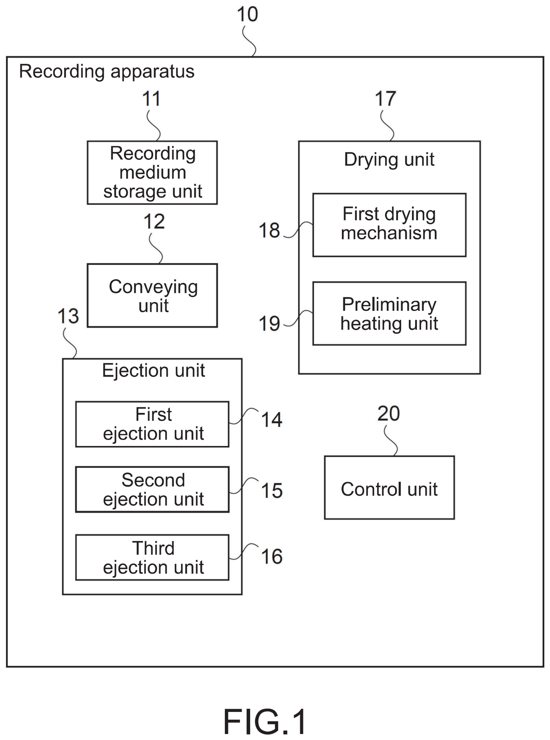

Fig. 1 is a block diagram showing a configuration of the recording apparatus 10.

As shown in Fig. 1, the recording apparatus 10 includes a recording medium storage unit 11, a conveying unit 12, an ejection unit 13, a drying unit 17, and a control unit 20.

The recording medium storage unit 11 stores a recording medium onto which the ink is ejected. For example, a transparent recording medium to be used for surface printing is stored and supplied one sheet at a time to the conveying unit 12.

The conveying unit 12 conveys the recording medium to the ejection unit 13 and the drying unit 17. For example, the conveying unit 12 is provided with a conveyor belt, a conveying roller, and a resist roller for conveying the recording medium from the recording medium storage unit 11 to the ejection unit 13 and from the ejection unit 13 to the drying unit 17, a support plate that supports the recording medium, a ventilation hole for adsorbing the recording medium on the conveyor belt, and the like.

The ejection unit 13 ejects the first ink, the second ink, the third ink, and a fourth ink onto the recording medium. For example, the ejection unit 13 includes a head unit on which the first ink, the second ink, the third ink, and the fourth ink are mounted, a plurality of nozzles for ejecting each ink (e.g., a first ejection unit 14 that ejects the first ink, a second ejection unit 15 that ejects the second ink, and a third ejection unit 16 that ejects the third ink), a drive circuit that controls the amount of the ink to be ejected, and a pressure element that pressurizes the nozzle. In this embodiment, the ejection unit 13 ejects the first ink, the second ink, the third ink, and the fourth ink onto the recording medium in this order.

Further, in this embodiment, the ejection unit 13 uses a line head that fixes a liquid jet head having a width equal to or larger than the recording width of the recording medium to the inkjet apparatus. The line heads of at least the first ink and the second ink each include a circulation head having a mechanism that prevents the ink from drying in the vicinity of the nozzle by circulating the ink to the vicinity of the nozzle.

The drying unit 17 dries the ink ejected onto the recording medium. In this embodiment, the drying unit 17 includes a first drying mechanism 18 for drying the first ink when the first ink is ejected. For example, the first drying mechanism 18 is provided between the first ejection unit 14 that ejects the first ink and the second ejection unit 15 that ejects the second ink. That is, the first drying mechanism 18 dries the first ink before the second ink is ejected onto the recording medium.

Further, the drying unit 17 further includes a preliminary heating unit 19 that heats the conveying unit 12 that conveys the recording medium. For example, the preliminary heating unit 19 performs preheating to heat the conveyor belt for conveying the recording medium in advance. In this embodiment, the conveying unit 12 is heated at the timing at which each ink is ejected to perform drying quickly after ejecting the inks of all colors (the first ink, the second ink, the third ink, and the fourth ink, etc.).

Note that the method of drying the ink by the drying unit 17 is not limited, and an infrared heater, a fan that blows warm air, or the like may be used. Further, the recording apparatus 10 is not limited to the above configuration, does not necessarily need to include the first drying mechanism 18 and the preliminary heating unit 19, does not necessarily need to use a line head for the ejection unit 13, and does not necessarily need to use a circulation head as the line head of each of the first ink and the second ink as long as the first ink, the second ink, the third ink, and the fourth ink can be sufficiently dried and an ink set capable of exhibiting favorable pinning properties, adhesion, and rubfastness and preventing color mixing and bleeding can be formed on the recording medium.

The control unit 20 controls the recording apparatus 10. In this embodiment, the control unit 20 performs control such that the ejection unit 13 ejects the first ink, the second ink, and the third ink onto the recording medium in this order and that the drying unit 17 dries the recording medium after the first ink, the second ink, and the third ink are ejected onto the recording medium. For example, the control unit 20 includes a calculation unit and a storage unit (not shown). The calculation unit is, for example, a central processing unit (CPU). The storage unit includes a storage medium such as a read only memory (ROM), a random access memory (RAM), and an electrically erasable programmable read only memory (EEPROM). The calculation unit reads the control program stored in the storage unit and executes the program, thereby executing various types of processing.

For example, the control unit 20 may form an image by supplying an ejection signal according to the pixel to the pressure element of the ejection unit 13 on the basis of the input image data and controlling the drying treatment of the drying unit 17 at appropriate timing. Further, the control unit 20 may perform control of each configuration mounted on the recording apparatus 10, such as an operation unit to which a user's operation is input and a display unit that includes a display showing an operation menu and status, in addition to the control of the ejection unit 13 and the drying unit 17.

This improves pinning properties due to either a reduction in the amount of liquid on the base material or an increase in viscosity of the ink on the base material by drying the first ink by the first drying mechanism 18 before the second ink is ejected. Note that whether a reduction in the amount of liquid on the base material or an increase in viscosity of the ink on the base material contributes to the improvement in pinning properties depends on the degree of drying of the ink.

Further, using a circulation head improves the stability of the ejection property. Further, in the case of the white ink, the effect of suppressing sedimentation of the pigment is exhibited.

Further, preheating to heat the conveyor belt for conveying the recording medium in advance, which is performed by the preliminary heating unit 19, allows initial pinning properties to be enhanced. Further, by performing drying quickly after ejecting the inks of all colors, it is possible to achieve image quality with the maintained pinning effect.

<Example>

Examples of the present disclosure will be described below. Note that the following Examples are merely illustrative examples of the present disclosure, and the present disclosure is not limited to the configurations of the following Examples.

<Method of producing ink>

In the present disclosure, as an ink set, the first ink, the second ink, the third ink, and the fourth ink are produced. A dispersion A is used for the first ink and the second ink, a dispersion B is used for the third ink, and a dispersion C is used for the fourth ink.

<Preparation of dispersion A>

The dispersion A included in the first ink and the second ink is prepared by mixing 50 g of a pigment, 14.5 g of a pigment dispersant, and 41.3 g of water using a ball mill and dispersing zirconia beads (diameter: 1.0 mm) at a filling rate of 70% and 8 m/s for 60 minutes using a bead mill (device name: Research Lab, manufactured by Shinmaru Enterprises Corporation).
Further, the following pigment is used as the pigment.
White pigment: "CR-50" manufactured by ISHIHARA SANGYO KAISHA, LTD.
Further, the following pigment dispersant is used as the pigment dispersant.
"SOLSPERSE (registered trademark) W100" manufactured by The Lubrizol Corporation

<Preparation of dispersion B>

The dispersion B included in the third ink is prepared in the same manner as that for the dispersion A. The difference from the dispersion A includes the pigment and the pigment dispersant, and the following pigment and pigment dispersant are used.

Cyan pigment: "PV FAST BLUE BG" (Pigment Blue 15:3) manufactured by Heubach
"DISPERBYK-2010" manufactured by BYK Japan KK

<Preparation of dispersion C>

The dispersion C included in the fourth ink is prepared in the same manner as that for the dispersion A. The difference from the dispersion A includes the pigment and the pigment dispersant, and the following pigment and pigment dispersant are used.

Yellow pigment: "Yellow D 1115J" (Pigment Yellow 155) manufactured by BASF SE
"DISPERBYK-2010" manufactured by BYK Japan KK

<Evaluation method>

For the ink sets according to Examples 1 to 10 and Comparative Examples 1 to 4, pinning properties, adhesion, rubfastness, and a concealing rate were evaluated by the following method.

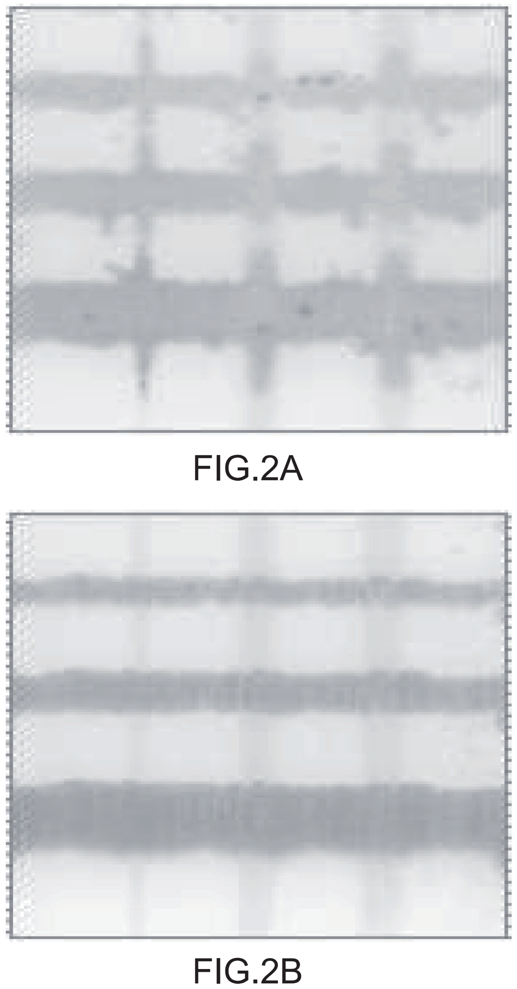

Figs. 2 are each a diagram relating to the evaluation of pinning properties. Fig. 2A is a diagram showing a case where there is no density difference between the second ink and the third ink. Fig. 2B is a diagram showing a case where there is a density difference between the second ink and the third ink.
For the evaluation of pinning properties, a simple jig is created using "1200 dpi circulation head" manufactured by KYOCERA Corporation, the first ink, the second ink, the third ink, and the fourth ink are ejected as shown in Figs. 2, and the length of bleeding at the intersection of a 5-dot line and a 5-dot line is measured using a measurement microscope. Further, as the base material onto which the ink is ejected, "corona-treated PET" manufactured by FUTAMURA CHEMICAL CO.,LTD. is used. Further, the temperature of preheating (process of heating the conveying plate for conveying the base material before the ejected ink is dried) performed on the base material is set to 50°C, the ink is ejected onto the base material, and then, drying is performed at 110°C for 5 minutes after 2 seconds.
As shown in Figs. 2, after printing the front solid surface with the white ink (the first ink and the second ink), the color ink (third ink) is printed. It can be seen that in Fig. 2A, the color ink is not pinned and bleeds in the case where there is no density difference between the inks. Further, it can be seen that in the case where there is a density difference as shown in Fig. 2B, the length of color bleeding is shorter as compared with the case where there is no density difference shown in Fig. 2A. For this reason, in this embodiment, the inks are prepared such that the density of the second ink is 0.06 g/cm$^3$ or more higher than the density of the third ink.
As the evaluation criteria for pinning properties, a case where the length of bleeding is 20 $\mu$m or less is evaluated to be A (Particularly good), a case where the length of bleeding is 20 $\mu$m or more and less than 50 $\mu$m is evaluated to be B (Good), and a case where the length of bleeding is 50 $\mu$m or more is evaluated to be C (Poor).

For the evaluation of adhesion, "corona-treated PET" manufactured by FUTAMURA CHEMICAL CO.,LTD. and "corona-treated OPP film" manufactured by FUTAMURA CHEMICAL CO.,LTD. are used as the base material. The first ink and the second ink were output as a solid image onto the base material, the third ink was output as a solid image onto the solid image, and they were dried at 110°C for 20 minutes and then left to stand for one day.

Further, 25 squares described in JIS K5600 Testing methods for paints were created for the regions where the solid image was formed, "Cellulose Tape (registered trademark)" (width of 18 mm, CT-18S) manufactured by NICHIBAN Co., Ltd. was applied thereto by a cross-cut method, the surface state of the image after peeling was observed, and adhesion was evaluated in accordance with the following evaluation criteria.

As the evaluation criteria for adhesion, no peeling due to tape is determined to be A (Particularly good), peeling of 1 to 3 squares of grid-like notches, which is acceptable for practical use, is determined to be B (Good), and 4 or more squares of grid-like notches, which is unacceptable for practical use, is determined to be C (Poor).

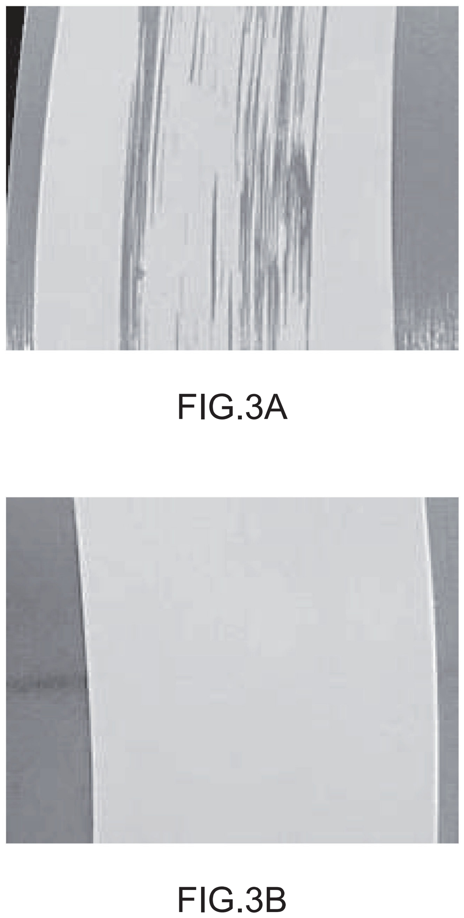

Figs. 3 are each a diagram relating to evaluation of rubfastness. Fig. 3A is a diagram showing a case where the ratio of the binder is low. Fig. 3B is a diagram showing a case where the ratio of the binder is a suitable ratio.

For the evaluation of rubfastness, the first ink and the second ink were output as a solid image onto the base material, the third ink was output as a 100% solid image onto the solid image, and they were dried at 110°C for 20 minutes and then left to stand for one day. In the evaluation method, A4-size copy paper ("copy paper CC90" manufactured by Mondi) was used as a recording medium and a dry friction test was performed on the solid image. The rubfastness was evaluated by measuring the change amount of image ID and the FD value on CC90.

As the evaluation criteria for rubfastness, no exposure of the base material after 1000 rubs is determined to be A (Particularly good), no exposure of the base material after 100 rubs is determined to be B (Good), and exposure of the base material is determined to be C (Poor).

As shown in Fig. 3A, in the case where the ratio of the binder (adhesive layer) in the first ink and the second ink is low, i.e., the amount of the binder is small and the ratio p/B is large, part of the base material is exposed due to friction. Meanwhile, in the case where the amount of the binder is a suitable amount, sufficient rubfastness can be achieved. Note that the suitable amount refers to satisfying the conditions that the ratio p/B in the first ink is 0 to 1.1 and the ratio p/B in the second ink is 1.3 to 3.0.

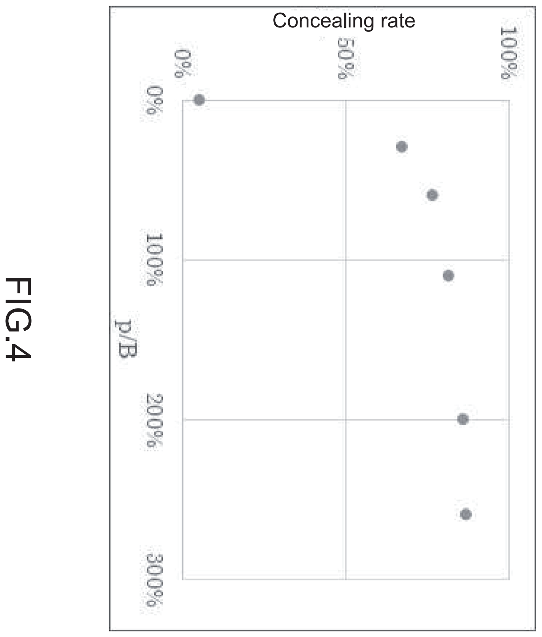

Fig. 4 is a diagram showing the relationship between the ratio of the pigment to the binder and the concealing rate. In Fig. 4, the horizontal axis indicates the ratio p/B (%) of the pigment to the binder, and the vertical axis indicates the concealing rate (%). That is, Fig. 4 plots the change in concealing rate as the ratio p/B varies.

The concealing rate was evaluated using an image forming apparatus (line head-mounted inkjet recording apparatus, a tester manufactured by KYOCERA Document Solutions Inc.) as an evaluation device in an environment of 25°C and 50% RH. A PET film ("Lumirror S10" manufactured by TORAY INDUSTRIES, INC.) was used as a recording medium. Further, five 150 mm × 200 mm solid images were formed with the first ink and the second ink from the recording head onto the recording medium. After heating the recording medium with the formed image for a certain period of time to confirm that the image has dried, measurements were taken using a portable reflection densitometer RD-19 (manufactured by GretagMacbeth LLC) to measure an image density K value, which was then evaluated in accordance with the following criteria.

Further, the K value that is the black density of black concealing rate test paper is measured, and a white film-shaped printed matter is superimposed onto the concealing rate test paper. The K value of the concealing rate test paper on which the film-shaped printed matter has been superimposed is measured. The degree to which the film-shaped printed matter conceals the black color of the base is calculated as a BK concealing rate. For the evaluation of the BK concealing rate, the BK concealing rate was calculated using the following formula.

[BK concealing rate %] = (1 - (K value of the image forming unit)/(K value of the base)) × 100

A case where [BK concealing rate %] > 90% is evaluated to be A (Particularly good). A case where 90 ≥ [BK concealing rate %] > 85% is evaluated to be B (Good). A case where 85 ≤ [BK concealing rate %] is evaluated as C (Poor).

As shown in Fig. 4, as the ratio p/B of the pigment to the binder increases, the concealing rate also increases. Further, when the ratio p/B of the pigment to the binder is 200% or more, the concealing rate remains flat. Therefore, the ratio p/B of the pigment to the binder in the second ink is favorably 1.3 to 3.0.

<Preparation of ink>

As shown in the following Tables 1 to 20, the first ink, the second ink, the third ink, and the fourth ink were prepared as Examples 1 to 10.

<Example 1>

In Example 1, the first ink (ink 1-1), the second ink (ink 2-1), the third ink (ink 3-1), and the fourth ink (ink 4-1) were prepared as shown in Table 1. Further, the evaluation results in Example 1 are shown in Table 2.

Here, "ACRYSET EF-009" manufactured by NIPPON SHOKUBAI CO., LTD. is used as a binder A. " SUPERFLEX 820" manufactured by DKS Co. Ltd. is used as a binder D. Further, "SILFACE SAG503A" that is a silicon surfactant manufactured by Nissin Chemical Co., Ltd. is used as a surfactant. Note that the percentages of each component shown in the following Tables are mass%.

(Table 1)

| Component | Example 1 |
| --- | --- |
| First ink | Ink 1-1 |
| Pigment (dispersion A) | 1.0% |
| Binder A (acrylic) | 5% |
| Solvent A (propylene glycol) | *20%* |
| Solvent B (Triethylene glycol monobutyl ether) | 5% |
| SILFACE SAG503A | 0.4% |
| Water | 68.6% |
| p/B | 0.2 |
| Second ink | Ink 2-1 |
| Pigment (dispersion A) | 10.0% |
| Binder D (breaking elongation of 5%) | 5% |
| Solvent A | 20% |
| Solvent B | 5% |
| SILFACE SAG503A | 0.4% |
| Water | 59.6% |
| p/B | 2 |
| Density (25°C) | 1.11 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| Fourth ink | Ink 4-1 |
| Pigment (dispersion C) | 3% |
| Binder D (breaking elongation of 5%) | 5% |
| Solvent A | *20%* |
| Solvent B | 5% |
| SILFACE SAG503A | 0.4% |
| Water | 66.6% |
| Density (25°C) | 1.04 |

(Table 2)

| Evaluation items | Evaluation results of Example 1 |
|---|---|
| Pinning properties | B |
| Adhesion | A |
| Rubfastness | A |
| Concealing rate | B |

In Example 1, all of the pinning properties, adhesion, rubfastness, and concealing rate were good or particularly good.

In the following, description of common ink types will be omitted.

<Example 2>

In Example 2, the first ink (ink 1-1), the second ink (ink 2-2), the third ink (ink 3-1), and the fourth ink (ink 4-1) were prepared as shown in Table 3. Further, the evaluation results in Example 2 are shown Table 4.

(Table 3)

| Component | Example 2 |
|---|---|
| First ink | Ink 1-1 |
| Pigment (dispersion A) | 1.0% |
| Binder A (acrylic) | 5% |
| Solvent A (propylene glycol) | 20% |
| Solvent B (Triethylene glycol monobutyl ether) | 5% |
| SILFACE SAG503A | 0.4% |
| Water | 68.6% |
| p/B | 0.2 |
| Second ink | Ink 2-2 |
| Pigment (dispersion A) | 15% |
| Binder D (breaking elongation of 5%) | 5% |
| Solvent A | 20% |
| Solvent B | 5% |
| SILFACE SAG503A | 0.4% |
| Water | 54.6% |
| p/B | 3 |
| Density (25°C) | 1.18 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| Fourth ink | Ink 4-1 |

(continued)

| Component | Example 2 |
|---|---|
| Pigment (dispersion C) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(Table 4)

| Evaluation items | Evaluation results of Example 2 |
|---|---|
| Pinning properties | A |
| Adhesion | A |
| Rubfastness | A |
| Concealing rate | A |

In Example 2, all of the pinning properties, adhesion, rubfastness, and concealing rate were particularly good. This is presumably because the pinning properties and concealing rate were improved due to the ratio (p/B) and density in the ink 2-2 higher than those in the ink 2-1.

<Example 3>

In Example 3, the first ink (ink 1-2), the second ink (ink 2-1), the third ink (ink 3-2), and the fourth ink (ink 4-2) were prepared as shown in Table 5. Further, the evaluation results in Example 3 are shown in Table 6.

(Table 5)

| Component | Example 3 |
|---|---|
| First ink | Ink 1-2 |
| Pigment (dispersion A) | 5.5% |
| Binder A (acrylic) | 5% |
| Solvent A (propylene glycol) | 20% |
| Solvent B (Triethylene glycol monobutyl ether) | 5% |
| SILFACE SAG503A | 0.4% |
| Water | 64.1% |
| p/B | 1.1 |
| Second ink | Ink 2-1 |
| Pigment (dispersion A) | 10.0% |
| Binder D (breaking elongation of 5%) | 5% |
| Solvent A | 20% |
| Solvent B | 5% |
| SILFACE SAG503A | 0.4% |
| Water | 59.6% |
| p/B | 2 |

(continued)

| Component | Example 3 |
|---|---|
| Density (25°C) | 1.11 |
| Third ink | Ink 3-2 |
| Pigment (dispersion B) | 4% |
| Binder D (breaking elongation of 5%) | 9% |
| Solvent A | *20%* |
| Solvent B | 5% |
| SILFACE SAG503A | 0.4% |
| Water | 61.6% |
| Density (25°C) | 1.05 |
| **Fourth** ink | Ink 4-2 |
| Pigment (dispersion C) | 4% |
| Binder D (breaking elongation of 5%) | 9% |
| Solvent A | 20% |
| Solvent B | 5% |
| SILFACE SAG503A | 0.4% |
| Water | 61.6% |
| Density (25°C) | 1.05 |

(Table 6)

| Evaluation items | Evaluation results of Example 3 |
|---|---|
| Pinning properties | B |
| Adhesion | A |
| Rubfastness | A |
| Concealing rate | B |

In Example 3, all of the pinning properties, adhesion, rubfastness, and concealing rate were good or particularly good. This is presumably because sufficient adhesion to the print medium can be expected even when the ratio p/B changes from 0.2 in the ink 1-1 to 1.1 in the ink 1-2.

<Example 4>

In Example 4, the first ink (ink 1-2), the second ink (ink 2-2), the third ink (ink 3-1), and the fourth ink (ink 4-1) were prepared as shown in Table 7. Further, the evaluation results in Example 4 are shown in Table 8.

(Table 7)

| Component | Example 4 |
|---|---|
| First ink | Ink 1-2 |
| Pigment (dispersion A) | 5.5% |
| Binder A (acrylic) | 5% |
| Solvent A (propylene glycol) | 20% |
| Solvent B (Triethylene glycol monobutyl ether) | 5% |
| SILFACE SAG503A | 0.4% |

(continued)

| Component | Example 4 |
|---|---|
| Water | 64.1% |
| p/B | 1.1 |
| Second ink | Ink 2-2 |
| Pigment (dispersion A) | 15% |
| Binder D (breaking elongation of 5%) | 5% |
| Solvent A | 20% |
| Solvent B | 5% |
| SILFACE SAG503A | 0.4% |
| Water | 54.6% |
| p/B | 3 |
| Density (25°C) | 1.18 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| **Fourth** ink | Ink 4-1 |
| Pigment (dispersion C) | 3% |
| Binder D (breaking elongation of 5%) | 5% |
| Solvent A | *20%* |
| Solvent B | 5% |
| SILFACE SAG503A | 0.4% |
| Water | 66.6% |
| Density (25°C) | 1.04 |

(Table 8)

| Evaluation items | Evaluation results of Example 4 |
|---|---|
| Pinning properties | A |
| Adhesion | A |
| Rubfastness | A |
| Concealing rate | A |

In Example 4, all of the pinning properties, adhesion, rubfastness, and concealing rate were particularly good. This is presumably because sufficient adhesion to the print medium can be expected even when the ratio p/B changes from 0.2 in the ink 1-1 to 1.1 in the ink 1-2. Further, it is conceivable that the pinning properties and concealing rate were improved due to the ratio (p/B) and density in the ink 2-2 higher than those in the ink 2-1.

<Example 5>

In Example 5, the first ink (ink 1-3), the second ink (ink 2-3), the third ink (ink 3-1), and the fourth ink (ink 4-1) were prepared as shown in Table 9. Further, the evaluation results in Example 5 are shown in Table 10.

(Table 9)

| Component | Example 5 |
|---|---|
| First ink | Ink 1-3 |
| Pigment (dispersion A) | 0.0% |
| Binder A (acrylic) | 15% |
| Solvent A (propylene glycol) | 20% |
| Solvent B (Triethylene glycol monobutyl ether) | 5% |
| SILFACE SAG503A | 0.4% |
| Water | 59.6% |
| p/B | 0 |
| Second ink | Ink 2-3 |
| Pigment (dispersion A) | 13.0% |
| Binder D (breaking elongation of 5%) | 5% |
| Solvent A | 20% |
| Solvent B | 5% |
| SILFACE SAG503A | 0.4% |
| Water | 56.6% |
| p/B | 2.6 |
| Density (25°C) | 1.15 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| Fourth ink | Ink 4-1 |
| Pigment (dispersion C) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(Table 10)

| Evaluation items | Evaluation results of Example 5 |
|---|---|
| Pinning properties | A |
| Adhesion | A |
| Rubfastness | A |
| Concealing rate | A |

In Example 5, all of the pinning properties, adhesion, rubfastness, and concealing rate were particularly good. This is presumably because even when using the ink 1-3 that functions as an adhesive layer containing no pigment, sufficient pinning properties, adhesion, rubfastness, and concealing rate can be achieved by ejecting the ink 2-3 including a large amount of (with a high ratio of) the pigment in a superimposed manner.

<Example 6>

In Example 6, the first ink (ink 1-4), the second ink (ink 2-2), the third ink (ink 3-1), and the fourth ink (ink 4-1) were prepared as shown in Table 11. Further, the evaluation results in Example 6 are shown in Table 12.

In Example 6, a polyolefin resin is used as the binder B in the first ink. Further, in Example 6, "Arrowbase SB1010" manufactured by UNITIKA LTD. is used as the binder B.

(Table 11)

| Component | Example 6 |
|---|---|
| First ink | Ink 1-4 |
| Pigment (dispersion A) | 5.5% |
| Binder B (polyolefin) | 5% |
| Solvent A (propylene glycol) | 20% |
| Solvent B (Triethylene glycol monobutyl ether) | 5% |
| SILFACE SAG503A | 0.4% |
| Water | 64.1% |
| p/B | 1.1 |
| Second ink | Ink 2-2 |
| Pigment (dispersion A) | 15% |
| Binder D (breaking elongation of 5%) | 5% |
| Solvent A | 20% |
| Solvent B | 5% |
| SILFACE SAG503A | 0.4% |
| Water | 54.6% |
| p/B | 3 |
| Density (25°C) | 1.18 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |

(continued)

| Component | Example 6 |
|---|---|
| Density (25°C) | 1.04 |
| **Fourth** ink | Ink 4-1 |
| Pigment (dispersion C) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(Table 12)

| Evaluation items | Evaluation results of Example 6 |
|---|---|
| Pinning properties | A |
| Adhesion | A |
| Rubfastness | A |
| Concealing rate | A |

In Example 6, all of the pinning properties, adhesion, rubfastness, and concealing rate were particularly good. This is presumably because sufficient pinning properties, adhesion, rubfastness, and concealing rate can be achieved even when the binder included in the first ink is polyolefin.

<Example 7>

In Example 7, the first ink (ink 1-5), the second ink (ink 2-2), the third ink (ink 3-1), and the fourth ink (ink 4-1) were prepared as shown in Table 13. Further, the evaluation results in Example 7 are shown in Table 14.
In Example 7, a urethane resin is used as the binder in the first ink. Further, in Example 7, "SUPERFLEX 150" manufactured by DKS Co. Ltd. is used as a binder C.

(Table 13)

| Component | Example 7 |
|---|---|
| First ink | Ink 1-5 |
| Pigment (dispersion A) | 5.5% |
| Binder C (urethane) | 5% |
| Solvent A (propylene glycol) | 20% |
| Solvent B (Triethylene glycol monobutyl ether) | 5% |
| SILFACE SAG503A | 0.4% |
| Water | 64.1% |
| p/B | 1.1 |
| Second ink | Ink 2-2 |
| Pigment (dispersion A) | 15% |
| Binder D (breaking elongation of 5%) | 5% |
| Solvent A | 20% |
| Solvent B | 5% |

(continued)

| Component | Example 7 |
|---|---|
| SILFACE SAG503A | 0.4% |
| Water | 54.6% |
| p/B | 3 |
| Density (25°C) | 1.18 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| Fourth ink | Ink 4-1 |
| Pigment (dispersion C) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(Table 14)

| Evaluation items | Evaluation results of Example 7 |
|---|---|
| Pinning properties | A |
| Adhesion | B |
| Rubfastness | A |
| Concealing rate | A |

In Example 7, all of the pinning properties, adhesion, rubfastness, and concealing rate were good or particularly good. This is presumably because sufficient pinning properties, adhesion, rubfastness, and concealing rate can be achieved even when the binder included in the first ink is urethane.

<Example 8>

In Example 8, the first ink (ink 1-2), the second ink (ink 2-4), the third ink (ink 3-3), and the fourth ink (ink4-3) were prepared as shown in Table 15. Further, the evaluation results in Example 8 are shown in Table 16.
Example 8 is characterized in that the binder used in each of the second ink, the third ink, and the fourth ink has a breaking elongation of 50%. Further, in Example 8, "SUPERFLEX 170" manufactured by DKS Co. Ltd. is used as a binder E.

(Table 15)

| Component | Example 8 |
|---|---|
| First ink | Ink 1-2 |

(continued)

| Component | Example 8 |
|---|---|
| Pigment (dispersion A) | 5.5% |
| Binder A (acrylic) | 5% |
| Solvent A (propylene glycol) | *20%* |
| Solvent B (Triethylene glycol monobutyl ether) | 5% |
| SILFACE SAG503A | 0.4% |
| Water | 64.1% |
| p/B | 1.1 |
| Second ink | Ink 2-4 |
| Pigment (dispersion A) | 13.0% |
| Binder E (breaking elongation of 50%) | 5% |
| Solvent A | 20% |
| Solvent B | 5% |
| SILFACE SAG503A | 0.4% |
| Water | 56.6% |
| p/B | 2.6 |
| Density (25°C) | 1.15 |
| Third ink | Ink 3-3 |
| Pigment (dispersion B) | 3% |
| Binder E (breaking elongation of 50%) | 5% |
| Solvent A | *20%* |
| Solvent B | 5% |
| SILFACE SAG503A | 0.4% |
| Water | 66.6% |
| Density (25°C) | 1.04 |
| Fourth ink | Ink 4-3 |
| Pigment (dispersion C) | 3% |
| Binder E (breaking elongation of 50%) | 5% |
| Solvent A | 20% |
| Solvent B | 5% |
| SILFACE SAG503A | 0.4% |
| Water | 66.6% |
| Density (25°C) | 1.04 |

(Table 16)

| Evaluation items | Evaluation results of Example 8 |
|---|---|
| Pinning properties | A |
| Adhesion | A |
| Rubfastness | A |
| Concealing rate | A |

In Example 8, all of the pinning properties, adhesion, rubfastness, and concealing rate were particularly good. This is presumably because using the binder having a low breaking elongation makes the coating film hard, resulting in favorable rubfastness.

<Example 9>

In Example 9, the first ink (ink 1-2), the second ink (ink 2-5), the third ink (ink 3-4), and the fourth ink (ink 4-1) were prepared as shown in Table 17. Further, the evaluation results in Example 9 are shown in Table 18.

Example 9 is characterized in that the binder used in each of the second ink, the third ink, and the fourth ink has a breaking elongation of 290%. Further, in Example 9, "SUPERFLEX 420" manufactured by DKS Co. Ltd. is used as a binder F.

(Table 17)

| Component | Example 9 |
| --- | --- |
| First ink | Ink 1-2 |
| Pigment (dispersion A) | 5.5% |
| Binder A (acrylic) | 5% |
| Solvent A (propylene glycol) | 20% |
| Solvent B (Triethylene glycol monobutyl ether) | 5% |
| SILFACE SAG503A | 0.4% |
| Water | 64.1% |
| p/B | 1.1 |
| Second ink | Ink 2-5 |
| Pigment (dispersion A) | 13.0% |
| Binder F (breaking elongation of 290%) | 5% |
| Solvent A | 20% |
| Solvent B | 5% |
| SILFACE SAG503A | 0.4% |
| Water | 56.6% |
| p/B | 2.6 |
| Density (25°C) | 1.15 |
| Third ink | Ink 3-4 |
| Pigment (dispersion B) | 3% |
| Binder F (breaking elongation of 290%) | 5% |
| Solvent A | 20% |
| Solvent B | 5% |
| SILFACE SAG503A | 0.4% |
| Water | 66.6% |
| Density (25°C) | 1.04 |
| **Fourth** ink | Ink 4-1 |
| Pigment (dispersion C) | 3% |
| Binder F (breaking elongation of 290%) | 5% |
| Solvent A | 20% |
| Solvent B | 5% |
| SILFACE SAG503A | 0.4% |

(continued)

| Component | Example 9 |
|---|---|
| Water | 66.6% |
| Density (25°C) | 1.04 |

(Table 18)

| Evaluation items | Evaluation results of Example 9 |
|---|---|
| Pinning properties | A |
| Adhesion | A |
| Rubfastness | B |
| Concealing rate | A |

In Example 9, all of the pinning properties, adhesion, rubfastness, and concealing rate were good or particularly good. This is presumably because sufficient pinning properties, adhesion, rubfastness, and concealing rate can be achieved even when the breaking elongation of the binder used in the second ink and subsequent inks exceeds 50%.

<Example 10>

In Example 10, the first ink (ink 1-2), the second ink (ink 2-9), the third ink (ink 3-1), and the fourth ink (ink 4-1) were prepared as shown in Table 19. Further, the evaluation results in Example 10 are shown in Table 20.

(Table 19)

| Component | Example 10 |
|---|---|
| First ink | Ink 1-2 |
| **Pigment** (dispersion A) | 5.5% |
| Binder A (acrylic) | 5% |
| Solvent A (propylene glycol) | *20%* |
| Solvent B (Triethylene glycol monobutyl ether) | 5% |
| SILFACE SAG503A | 0.4% |
| Water | 64.1% |
| p/B | 1.1 |
| Second ink | Ink 2-9 |
| Pigment (dispersion A) | 13.0% |
| Binder D (breaking elongation of 5%) | 10% |
| Solvent A | 20% |
| Solvent B | 5% |
| SILFACE SAG503A | 0.4% |
| Water | 51.6% |
| p/B | 1.3 |
| Density (25°C) | 1.14 |
| Third ink | Ink 3-1 |
| Pigment (dispersion B) | 3% |
| Binder D (breaking elongation of 5%) | 5% |
| Solvent A | *20%* |

(continued)

| Component | Example 10 |
|---|---|
| Solvent B | 5% |
| SILFACE SAG503A | 0.4% |
| Water | 66.6% |
| Density (25°C) | 1.04 |
| Fourth ink | Ink 4-1 |
| Pigment (dispersion C) | 3% |
| Binder D (breaking elongation of 5%) | 5% |
| Solvent A | *20%* |
| Solvent B | 5% |
| SILFACE SAG503A | 0.4% |
| Water | 66.6% |
| Density (25°C) | 1.04 |

(Table 20)

| Evaluation items | Evaluation results of Example 10 |
|---|---|
| Pinning properties | A |
| Adhesion | A |
| Rubfastness | A |
| Concealing rate | A |

In Example 10, all of the pinning properties, adhesion, rubfastness, and concealing rate were good or particularly good. This is presumably because sufficient pinning properties, adhesion, rubfastness, and concealing rate can be achieved even when the ratio (p/B) of the pigment to the binder of the second ink is 1.3 (lower limit value).

<Comparative Example>

Comparative Examples of the present disclosure will be described below.
As shown in the following Tables 21 to 28, the first ink, the second ink, the third ink, and the fourth ink were prepared as Comparative Examples 1 to 4.

<Comparative Example 1>

In Comparative Example 1, the first ink (ink 1-6), the second ink (ink 2-3), the third ink (ink 3-1), and the fourth ink (ink 4-1) were prepared as shown in Table 21. Further, the evaluation results in Comparative Example 1 are shown in Table 22.

(Table 21)

| Component | Comparative Example 1 |
|---|---|
| First ink | Ink 1-6 |
| Pigment (dispersion A) | 7.00% |
| Binder A (acrylic) | 5% |
| Solvent A (propylene glycol) | 20% |
| Solvent B (Triethylene glycol monobutyl ether) | 5% |
| SILFACE SAG503A | 0.4% |

(continued)

| Component | Comparative Example 1 |
|---|---|
| Water | 62.6% |
| p/B | 1.4 |
| Second ink | Ink 2-3 |
| Pigment (dispersion A) | 13.0% |
| Binder D (breaking elongation of 5%) | 5% |
| Solvent A | *20%* |
| Solvent B | 5% |
| SILFACE SAG503A | 0.4% |
| Water | 56.6% |
| p/B | 2.6 |
| Density (25°C) | 1.15 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| Fourth ink | Ink 4-1 |
| Pigment (dispersion C) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(Table 22)

| Evaluation items | Evaluation results of Comparative Example 1 |
|---|---|
| Pinning properties | A |
| Adhesion | C |
| Rubfastness | B |
| Concealing rate | A |

In Comparative Example 1, the adhesion was evaluated to be poor. This is presumably because the ratio (p/B) of the pigment to the binder in the first ink was 1.4 exceeding the upper limit value of 1.1, resulting in an insufficient amount of the binder.

<Comparative Example 2>

In Comparative Example 2, the first ink (ink 1-2), the second ink (ink 2-6), the third ink (ink 3-1), and the fourth ink (ink 4-1) were prepared as shown in Table 23. Further, the evaluation results in Comparative Example 2 are shown in Table 24.

(Table 23)

| Component | Comparative Example 2 |
|---|---|
| First ink | Ink 1-2 |
| Pigment (dispersion A) | 5.5% |
| Binder A (acrylic) | 5% |
| Solvent A (propylene glycol) | 20% |
| Solvent B (Triethylene glycol monobutyl ether) | 5% |
| SILFACE SAG503A | 0.4% |
| Water | 64.1% |
| p/B | 1.1 |
| Second ink | Ink 2-6 |
| Pigment (dispersion A) | 7% |
| Binder D (breaking elongation of 5%) | 5% |
| Solvent A | 20% |
| Solvent B | 5% |
| SILFACE SAG503A | 0.4% |
| Water | 62.6% |
| p/B | 1.4 |
| Density (25°C) | 1.08 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| Fourth ink | Ink 4-1 |
| Pigment (dispersion C) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(Table 24)

| Evaluation items | Evaluation results of Comparative Example 2 |
|---|---|
| Pinning properties | C |
| Adhesion | A |
| Rubfastness | A |
| Concealing rate | B |

In Comparative Example 2, the pinning properties were evaluated to be poor. This is presumably because the difference between the density ($\rho$2) of the second ink and the density($\rho$3) of the third ink is 0.04 (g/cm$^3$), failing to satisfy the relationship of $\rho$2 - $\rho$3 > 0.06 (g/cm$^3$).

<Comparative Example 3>

In Comparative Example 3, the first ink (ink 1-2), the second ink (ink 2-7), the third ink (ink 3-1), and the fourth ink (ink 4-1) were prepared as shown in Table 25. Further, the evaluation results in Comparative Example 3 are shown in Table 26.

(Table 25)

| Component | Comparative Example 3 |
|---|---|
| First ink | Ink 1-2 |
| Pigment (dispersion A) | 5.5% |
| Binder A (acrylic) | 5% |
| Solvent A (propylene glycol) | 20% |
| Solvent B (Triethylene glycol monobutyl ether) | 5% |
| SILFACE SAG503A | 0.4% |
| Water | 64.1% |
| p/B | 1.1 |
| Second ink | Ink 2-7 |
| Pigment (dispersion A) | 5% |
| Binder D (breaking elongation of 5%) | 5% |
| Solvent A | *20%* |
| Solvent B | 5% |
| SILFACE SAG503A | 0.4% |
| Water | 64.6% |
| p/B | 1.0 |
| Density (25°C) | 1.07 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(continued)

| Component | Comparative Example 3 |
|---|---|
| Fourth ink | Ink 4-1 |
| Pigment (dispersion C) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |

(Table 26)

| Evaluation items | Evaluation results of Comparative Example 3 |
|---|---|
| Pinning properties | C |
| Adhesion | A |
| Rubfastness | A |
| Concealing rate | C |

In Comparative Example 3, the concealing rate was evaluated to be poor. This is presumably because the ratio (p/B) of the pigment to the binder of the second ink is 1.8. That is, it is conceivable that when the ratio (p/B) of the pigment to the binder of the second ink falls below 1.3, the concealing rate is insufficient.

<Comparative Example 4>

In Comparative Example 4, the first ink (ink 1-2), the second ink (ink 2-8), the third ink (ink 3-1), and the fourth ink (ink 4-1) are prepared as shown in Table 27. Further, the evaluation results in Comparative Example 4 are shown in Table 28.

(Table 27)

| Component | Comparative Example 4 |
|---|---|
| First ink | Ink 1-2 |
| Pigment (dispersion A) | 5.5% |
| Binder A (acrylic) | 5% |
| Solvent A (propylene glycol) | 20% |
| Solvent B (Triethylene glycol monobutyl ether) | 5% |
| SILFACE SAG503A | 0.4% |
| Water | 64.1% |
| p/B | 1.1 |
| Second ink | Ink 2-8 |
| Pigment (dispersion A) | 17% |
| Binder D (breaking elongation of 10%) | 5% |
| Solvent A | 20% |
| Solvent B | 5% |
| SILFACE SAG503A | 0.4% |

(continued)

| Component | Comparative Example 4 |
|---|---|
| Water | 52.6% |
| p/B | 3.4 |
| Density (25°C) | 1.19 |
| Third ink | Ink 3-1 |
| Pigment (dispersion B) | 3% |
| Binder D (breaking elongation of 5%) | 5% |
| Solvent A | 20% |
| Solvent B | 5% |
| SILFACE SAG503A | 0.4% |
| Water | 66.6% |
| Density (25°C) | 1.04 |
| Fourth ink | Ink 4-1 |
| Pigment (dispersion C) | 3% |
| Binder D (breaking elongation of 10%) | 5% |
| Solvent A | 20% |
| Solvent B | 5% |
| SILFACE SAG503A | 0.4% |
| Water | 66.6% |
| Density (25°C) | 1.04 |

(Table 28)

| Evaluation items | Evaluation results of Comparative Example 4 |
|---|---|
| Pinning properties | A |
| Adhesion | A |
| Rubfastness | C |
| Concealing rate | A |

In Comparative Example 4, the rubfastness was evaluated to be poor. This is presumably because the ratio (p/B) of the pigment to the binder in the second ink is 3.4 exceeding the upper limit value of 3.0, resulting in insufficient rubfastness.

## Claims

1. An ink set, comprising:

a first ink;
a second ink; and
a third ink,
each of the first ink, the second ink, and the third ink including resin fine particles, an organic solvent, water, and a surfactant,
a ratio of a pigment to a binder included in the first ink being 0 or more and 1.1 or less,
a ratio of a pigment to a binder included in the second ink being 1.3 or more and 3.0 or less,
density of the second ink being 0.05 $g/cm^3$ or more higher than density of the third ink.

2. The ink set according to claim 1, wherein
each of the first ink and the second ink is a white ink.

3. The ink set according to claim 1 or 2, wherein
the surfactant includes a silicon surfactant.

4. The ink set according to claim 1 or 2, wherein
each of the first ink, the second ink, and the third ink is a water-based ink used for surface printing in which a coating film of the ink is present on an outermost layer.

5. The ink set according to claim 1 or 2, wherein
the first ink includes at least resin fine particles of an acrylic resin or a polyolefin resin.

6. The ink set according to claim 1 or 2, wherein

   resin fine particles with a breaking elongation of 50% or less are used as the second ink, and
   resin fine particles with a breaking elongation of 50% or less are used as the third ink.

7. A recording apparatus (10) that uses the ink set according to claim 1 or 2, comprising:

   an ejection unit (13) that ejects the first ink, the second ink, and the third ink onto a recording medium;
   a drying unit (17) that dries the first ink, the second ink, and the third ink applied to the recording medium; and
   a control unit (20) that performs control such that the ejection unit (13) ejects the first ink, the second ink, and the third ink onto the recording medium in this order, and that the drying unit (17) dries the recording medium onto which the first ink, the second ink, and the third ink have been ejected.

8. The recording apparatus (10) according to claim 7, wherein

   the ejection unit (13) includes a first ejection unit (14) that ejects the first ink, a second ejection unit (15) that ejects the second ink, and a third ejection unit (16) that ejects the third ink, and
   the drying unit (17) includes a first drying mechanism (18) that dries the first ink ejected by the first ejection unit (14).

9. The recording apparatus (10) according to claim 7, further comprising

   a conveying unit that includes a conveying plate for conveying the recording medium,
   the drying unit (17) further including a preliminary heating unit (19) that heats the conveying plate in advance before the ejection unit (13) ejects the ink.

10. The recording apparatus (10) according to claim 8, wherein

    a line head is used as the ejection unit (13), and
    at least the line head of the first ejection unit (14) and the line head of the second ejection unit (15) are circulation heads.

FIG.1

FIG.2A

FIG.2B

FIG.3A

FIG.3B

# FIG.4

Europäisches
Patentamt

European
Patent Office

Office européen
des brevets

## EUROPEAN SEARCH REPORT

**Application Number**

EP 25 22 1528

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/195487 A1 (FUJIFILM CORP [JP]) 26 September 2024 (2024-09-26) | 1,3-10 | INV. C09D11/322 B41J11/00 C09D11/40 |
| A | * paragraphs [0148] - [0156]; claims; figure 1; examples; tables 3,4 * | 2 | |
| | ----- | | |
| X | EP 3 543 300 A1 (SEIKO EPSON CORP [JP]) 25 September 2019 (2019-09-25) | 1,3-10 | |
| A | * example 10 * | 2 | |
| | ----- | | |
| X | US 2018/030300 A1 (OHTA HITOSHI [JP]) 1 February 2018 (2018-02-01) | 1,3-10 | |
| A | * claims; tables 3,4 * | 2 | |
| | ----- | | |

**TECHNICAL FIELDS SEARCHED (IPC)**

C09D
B41J

The present search report has been drawn up for all claims

| Place of search | Date of completion of the search | Examiner |
|---|---|---|
| Munich | 1 April 2026 | Zeslawski, Wojciech |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
......................................................................................................
& : member of the same patent family, corresponding
   document

EPO FORM 1503 03.82 (P4C01)

## ANNEX TO THE EUROPEAN SEARCH REPORT
## ON EUROPEAN PATENT APPLICATION NO.

EP 25 22 1528

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2026

| Patent document cited in search report | | Publication date | Patent family member(s) | | Publication date |
|---|---|---|---|---|---|
| WO 2024195487 | A1 | 26-09-2024 | CN | 120897850 A | 04-11-2025 |
| | | | EP | 4684976 A1 | 28-01-2026 |
| | | | JP | WO2024195487 A1 | 26-09-2024 |
| | | | US | 20260014801 A1 | 15-01-2026 |
| | | | WO | 2024195487 A1 | 26-09-2024 |
| EP 3543300 | A1 | 25-09-2019 | CN | 110294968 A | 01-10-2019 |
| | | | EP | 3543300 A1 | 25-09-2019 |
| | | | US | 2019292392 A1 | 26-09-2019 |
| US 2018030300 | A1 | 01-02-2018 | JP | 6772620 B2 | 21-10-2020 |
| | | | JP | 2018015968 A | 01-02-2018 |
| | | | US | 2018030300 A1 | 01-02-2018 |

EPO FORM P0459

For more details about this annex : see Official Journal of the European Patent Office, No. 12/82

**EP 4 759 886 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012041380 A
- JP 2003313468 A
- JP 2010076224 A